# EUROPEAN PATENT APPLICATION

(11) **EP 4 585 474 A1**
(43) Date of publication of application: **16.07.2025**
(21) Application number: 24169153.4
(22) Date of filing: 09.04.2024
(51) Int. Cl.: B60R 21/205, B60R 21/216, B60R 21/2165, B60R 21/215

(54) **CRASH PAD MODULE, MOLD FOR MANUFACTURING CRASH PAD MODULE, AND METHOD OF MANUFACTURING CRASH PAD MODULE USING SAME**

(30) Priority: 09.01.2024 KR 20240003570
(71) Applicant: Hyundai Mobis Co., Ltd., Gangnam-gu Seoul 06141 (KR)
(72) Inventor: CHOI, Ik Keun, 16891 Yongin-si (KR); YOU, Young Jin, 16891 Yongin-si (KR); SON, Chang Wan, 16891 Yongin-si (KR)
(74) Representative: Vossius & Partner Patentanwälte Rechtsanwälte mbB

(57) **Abstract**

A crash pad module including a crash pad, an airbag door configured to be opened in a first direction when a portion of the crash pad is cut, and a scrim inserted into the crash pad and the airbag door, the scrim including a bent portion formed by bending a portion of the scrim, a through hole being formed in a hinge of the airbag door, and the bent portion being disposed at a location corresponding to the through hole.

## Description

This application claims priority to and the benefit of Korean Patent Application No. 10-2024-0003570, filed on January 9, 2024, the entire disclosure of which is incorporated herein by reference for all purposes.

### BACKGROUND

### 1. Field

The present invention relates to a crash pad module, a mold for manufacturing a crash pad module, and a method of manufacturing a crash pad module using the same, and more specifically, to a crash pad module of which a scrim is able to easily hold and support an airbag door when an airbag is deployed, a mold for manufacturing the same, and a method of manufacturing a crash pad module using the same.

### 2. Description of the Related Art

An airbag (particularly, a passenger airbag (PAB)) serves to minimize an injury to a passenger when a vehicle crash occurs. Such an airbag is mounted in a crash pad, and when an airbag door provided at a side of the crash pad is opened, a cushion is deployed to protect a passenger.

When the PAB is deployed, the airbag door is opened toward the passenger, and the airbag is deployed. In this case, since there is a possibility that the airbag door is damaged by an inflation force of the airbag, a scrim is provided to prevent the airbag door from being damaged and separated toward the passenger. The scrim has a mesh structure in the form of a fabric sheet, is insertion-injected, and serves to hold an airbag door part when the airbag is deployed.

The conventional scrim is designed to be delaminated and separated from an airbag suit wall to compensate for an insufficient length of an airbag door. Accordingly, a delaminated and separated length of the scrim can be increased by a high pressure of an inflator, and in some cases, the scrim can be completely separated therefrom. Particularly, in the case of an electric vehicle, since an inside space of the vehicle is further expanded, and an airbag for covering the expanded space is further enlarged, a high-pressure inflator may be used. When the conventional scrim is used in the electric vehicle, a phenomenon in which the scrim is completely delaminated or separated may occur.

When the scrim is completely delaminated and separated therefrom, the airbag door can be damaged, and the airbag door can cause an injury to the passenger by being separated toward a passenger. Accordingly, a crash pad module capable of preventing delamination and separation of an airbag door part and stably holding the airbag door part and an apparatus for manufacturing the same are required.

### SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In a general aspect, here is provided a crash pad module including a crash pad, an airbag door configured to be opened in a first direction when a portion of the crash pad is cut, and a scrim inserted into the crash pad and the airbag door, the scrim including a bent portion formed by bending a portion of the scrim, a through hole being formed in a hinge of the airbag door, and the bent portion being disposed at a location corresponding to the through hole.

The through hole may be defined as a long hollow shape extending in a longitudinal direction of the hinge and a bridge connecting portions of the through hole in a width direction is formed inside the through hole.

The through hole may be provided as one of a plurality of through holes, the plurality of through holes being spaced at a predetermined distance from each other in the longitudinal direction of the hinge.

The crash pad module may include an airbag suit, the airbag suit being configured to protrude from an edge portion of the airbag door toward a rear surface of the crash pad.

The crash pad module may include a reinforcing rib, the reinforcing rib being provided on a portion at which a rear surface of the airbag door is in contact with the airbag suit.

The crash pad, the airbag door, and the airbag suit may be integrally formed.

A thickness of the bridge is the same as a thickness of the airbag door.

In the bent portion of the scrim, an empty portion corresponding to the bridge may be provided.

The crash pad module may include an injection material, the injection material being configured as a thin film on an inner surface of the bent portion.

The bent portion may be configured to unfold and translate, in a deployment of the airbag door, to compensate for a deployment stress on the scrim and airbag door.

In a general aspect, here is provided a crash pad module including a crash pad, an airbag door configured to be opened in a first direction when a portion of the crash pad is cut, the airbag door comprising a hinge, the hinge having a through hole defined therein, and a scrim inserted into the crash pad and the airbag door, the scrim comprising a bent portion formed by bending a portion of the scrim, the bent portion being disposed at a first location on the scrim corresponding to a second location of the through hole in the airbag door.

The crash pad module may include a bridge configured to connect portions of the through hole in a width direction, the bridge being formed inside the through hole, the through hole being defined as a long hollow shape extending in a longitudinal direction of the hinge.

The bent portion may include an empty portion defined therein corresponding to the bridge.

The crash pad may include an airbag suit, the airbag suit being configured to protrude from an edge portion of the airbag door toward a rear surface of the crash pad.

The crash pad may include a reinforcing rib, the reinforcing rib being provided on a third location at which a rear surface of the airbag door is in contact with the airbag suit.

The reinforcing rib may be configured to absorb a stress between the rear surface of the airbag door and a side surface of the airbag suit.

The bent portion may be configured to unfold and translate, in a deployment of the airbag door, to secure the airbag door and compensate for a deployment stress on the scrim and airbag door.

### BRIEF DESCRIPTION OF THE DRAWINGS

FIG. 1 is a view illustrating a crash pad module according to one embodiment of the present invention;
FIG. 2 is a view illustrating an airbag door of a crash pad module according to one embodiment of the present invention;
FIG. 3 is a view illustrating an airbag door according to another embodiment of the present invention;
FIG. 4 is a cross-sectional view illustrating a portion in which a through hole of an airbag door is formed according to one embodiment of the present invention;
FIG. 5 is a cross-sectional view illustrating a portion in which a through hole of an airbag door is formed according to still another embodiment of the present invention;
FIG. 6 is a cross-sectional view illustrating a portion in which a bridge of an airbag door is formed according to one embodiment of the present invention;
FIG. 7 is a view illustrating a scrim according to one embodiment of the present invention;
FIG. 8 is a rear view illustrating a crash pad module according to one embodiment of the present invention;
FIG. 9 is a cross-sectional view illustrating a portion in which a through hole of an airbag door is formed according to still another embodiment of the present invention;
FIG. 10 is a cross-sectional view illustrating an airbag door according to still another embodiment of the present invention;
FIG. 11 is a view illustrating an airbag door of a crash pad module that is opened according to one embodiment of the present invention;
FIG. 12 is a view illustrating a lower mold of a mold for manufacturing a crash pad module according to one embodiment of the present invention;
FIG. 13 is a view illustrating the lower mold and a press jig of the mold for manufacturing a crash pad module according to one embodiment of the present invention;
FIG. 14 is a view illustrating the press jig of the mold for manufacturing a crash pad module that bends a scrim according to one embodiment of the present invention;
FIG. 15 is a view illustrating the bent scrim seated on the lower mold of the mold for manufacturing a crash pad module according to one embodiment of the present invention;
FIG. 16 is a view illustrating the lower mold and an upper mold of the mold for manufacturing a crash pad module that are engaged with each other according to one embodiment of the present invention; and
FIG. 17 is a flowchart illustrating a method of manufacturing a crash pad module using a mold for manufacturing a crash pad module according to one embodiment of the present invention.

Throughout the drawings and the detailed description, unless otherwise described or provided, the same, or like, drawing reference numerals may be understood to refer to the same, or like, elements, features, and structures. The drawings may not be to scale, and the relative size, proportions, and depiction of elements in the drawings may be exaggerated for clarity, illustration, and convenience.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent after an understanding of the disclosure of this application. For example, the sequences of operations described herein are merely examples, and are not limited to those set forth herein, but may be changed as will be apparent after an understanding of the disclosure of this application, with the exception of operations necessarily occurring in a certain order.

The features described herein may be embodied in different forms and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application.

Advantages and features of the present disclosure and methods of achieving the advantages and features will be clear with reference to embodiments described in detail below together with the accompanying drawings. However, the present disclosure is not limited to the embodiments disclosed herein but will be implemented in various forms. The embodiments of the present disclosure are provided so that the present disclosure is completely disclosed, and a person with ordinary skill in the art can fully understand the scope of the present disclosure. The present disclosure will be defined only by the scope of the appended claims. Meanwhile, the terms used in the present specification are for explaining the embodiments, not for limiting the present disclosure.

Terms, such as first, second, A, B, (a), (b) or the like, may be used herein to describe components. Each of these terminologies is not used to define an essence, order or sequence of a corresponding component but used merely to distinguish the corresponding component from other component(s). For example, a first component may be referred to as a second component, and similarly the second component may also be referred to as the first component.

Throughout the specification, when a component is described as being "connected to," or "coupled to" another component, it may be directly "connected to," or "coupled to" the other component, or there may be one or more other components intervening therebetween. In contrast, when an element is described as being "directly connected to," or "directly coupled to" another element, there can be no other elements intervening therebetween.

In a description of the embodiment, in a case in which any one element is described as being formed on or under another element, such a description includes both a case in which the two elements are formed in direct contact with each other and a case in which the two elements are in indirect contact with each other with one or more other elements interposed between the two elements. In addition, when one element is described as being formed on or under another element, such a description may include a case in which the one element is formed at an upper side or a lower side with respect to another element.

The singular forms "a", "an", and "the" are intended to include the plural forms as well, unless the context clearly indicates otherwise. It will be further understood that the terms "comprises/comprising" and/or "includes/including" when used herein, specify the presence of stated features, integers, steps, operations, elements, and/or components, but do not preclude the presence or addition of one or more other features, integers, steps, operations, elements, components and/or groups thereof.

Hereinafter, embodiments of a vehicle controller heat dissipation module will be described in detail with reference to the accompanying drawings, and when the embodiments are described with reference to the accompanying drawings, components which are the same or correspond to each other will be denoted by the same reference numerals, and redundant description thereof will be omitted.

Hereinafter, a surface formed in a direction in which an airbag door 20 is deployed or in a direction from a crash pad 10 to a windshield is defined as a front surface, and a surface formed to face an inside space of the crash pad 10 is defined as a rear surface.

The crash pad 10 covers components at a front side of a vehicle, and in the event of an accident, an airbag installed inside the crash pad 10 is deployed so as to serve to protect a passenger. The crash pad 10 is manufactured through a method of injecting a plastic resin into a mold. The airbag door 20 may be formed on a portion of the crash pad 10 in which the airbag is installed, the airbag door 20 may be opened by an inflation pressure of the airbag, and an airbag cushion may be deployed toward the passenger.

The airbag door 20 is opened in a manner in which at least a portion of the airbag door 20 is cut in one surface of the crash pad 10, and in order to prevent the airbag door 20 from being damaged and separated toward the passenger or the windshield and to stably support the airbag door, a scrim 40 is disposed inside the airbag door 20 and the crash pad 10.

When the crash pad 10 is manufactured, the scrim 40 formed of a fabric material may be inserted into a mold in advance, and then an injection material may be injected so that the scrim 40 may be inserted into the crash pad 10. The scrim 40 actually serves as a hinge of the airbag door 20 and becomes a rotary shaft of the airbag door 20 when the airbag door 20 is opened.

However, since the scrim 40 is formed of the fabric material, when a high-pressure is applied to the scrim 40, there are problems that the scrim 40 is torn or elongated and does not properly support the airbag door 20. Particularly, when the scrim 40 does not have an extra length, there are problems that a hinge part of the scrim 40 is elongated or damaged and the airbag door 20 is separated by a high-inflation pressure of the airbag when the airbag door 20 is opened.

Accordingly, a crash pad module in which an extra length of the scrim 40 is secured and which stably supports the airbag door 20 is required. The present invention relates to a crash pad module in which a hole is formed in a hinge part of an airbag door 20 and a bent portion 42 is formed at a portion of a scrim 40 corresponding to the hole so that the scrim 40 has an extra length. The present invention provides the crash pad module in which the bent portion 42 compensates for an insufficient length to stably support the airbag door 20 when an airbag is deployed and the airbag door 20 is opened, a mold for manufacturing a crash pad module, and a method of manufacturing a crash pad module using the same.

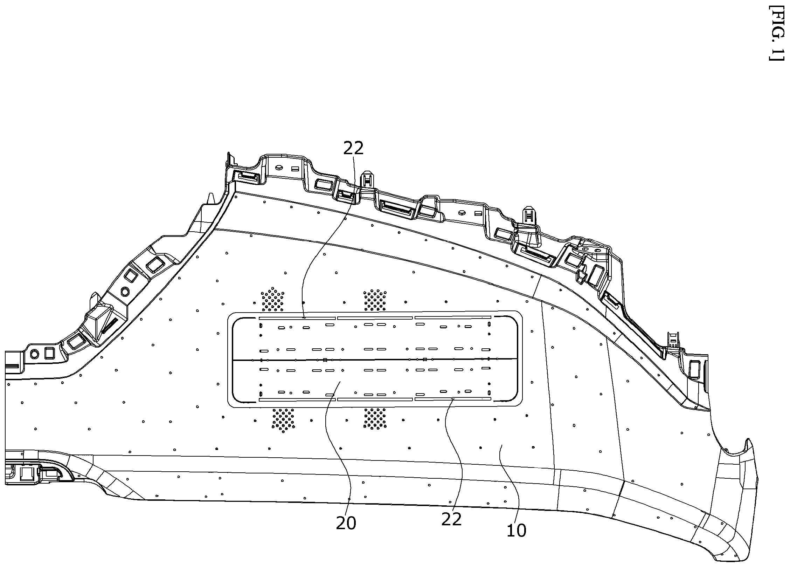

FIG. 1 is a view illustrating a crash pad module according to one embodiment of the present invention.

Referring to FIG. 1, the crash pad module according to one embodiment of the present invention may include a crash pad 10, an airbag door 20 which is opened when at least a portion of the crash pad 10 is cut, and a scrim 40 inserted into the crash pad 10 and the airbag door 20.

In the case of the present invention, the crash pad module may be applied to an integrated model in which the crash pad 10, the airbag door 20, and the scrim 40 are integrally formed. The scrim 40 may be inserted into a mold in advance before the crash pad 10 and the airbag door 20 are injection molded, and then an injection material may be injected so that the scrim 40 may be inserted into the crash pad 10 and the airbag door 20.

A passenger airbag (PAB) for protecting a passenger may be disposed on a rear surface of the crash pad 10. An airbag suit 30 connected to an airbag module may be formed on the rear surface of the crash pad 10.

The airbag suit 30 may be formed to protrude from the rear surface of the crash pad 10 along a portion in which the airbag module is disposed. The airbag door 20 of which at least a portion is cut and which is opened in one direction may be formed in the crash pad 10.

A direction in which the airbag door 20 is opened is a direction toward an interior of a vehicle, and the airbag door 20 may be opened in front of the passenger toward a windshield. The airbag door 20 may be formed to cover a portion in which the airbag suit 30 and the airbag module are disposed, and a cut line 21 may be formed along an edge of the airbag door 20.

When an airbag is deployed, the cut line 21 of the edge of the airbag door 20 may be cut by a pressure of the airbag, and then the airbag door 20 may be opened. The airbag door 20 may be opened based on one side thereof connected to the crash pad 10 as a hinge. Accordingly, a portion corresponding to the hinge may not be cut and may support the airbag door 20 when the airbag door 20 is opened.

In general, a material for forming the airbag door 20 and the crash pad 10 is a plastic resin and is deformed while a side of the hinge is elongated or the airbag door 20 is delaminated by a high-inflation pressure of the airbag when the airbag door 20 is opened. When a hinge part of the airbag door 20 is excessively deformed, an opening extent of the airbag door 20 may increase, or the deployment of an airbag cushion may be interfered.

When the airbag door 20 is excessively opened, the airbag door 20 may be separated toward the passenger or collide with the windshield and affect safety of the passenger. Accordingly, the scrim 40 is inserted into the airbag door 20 and the crash pad 10, and the scrim 40 is a mesh-shaped net formed of a fabric material and serves as an actual hinge of the airbag door 20. The scrim 40 may be formed of a flexible material and flexibly deformed to provide an extra length to the side of the hinge and hold the airbag door 20 even when a high-pressure is applied thereto.

However, as described above, when the airbag door 20 is excessively opened, the scrim 40 is damaged such as being torn and does not properly support the airbag door 20. When the airbag door 20 is opened, a force is applied to a portion corresponding to the hinge in a direction in which the portion is deployed and elongated, and the scrim 40 is elongated or delaminated from the airbag door 20 and the crash pad 10 and does not properly support the airbag door 20.

A bent portion 42 is formed in the scrim 40 according to one embodiment of the present invention so that the portion corresponding to the hinge has an extra length. At least of a portion of the scrim 40 may be bent at the bent portion 42 and have the extra length as much as the bent portion.

After the scrim 40 is seated in the mold, since the injection material is injected to form the crash pad 10 and the airbag door 20, a shape of the mold may be preset to prevent the injection material from filling the portion corresponding to the bent portion 42 of the scrim 40. When the bent portion 42 of the scrim 40 is formed along the shape of the mold, since the corresponding portion is not filled with the injection material, a through hole 22 may be formed in a hinge portion of the airbag door 20.

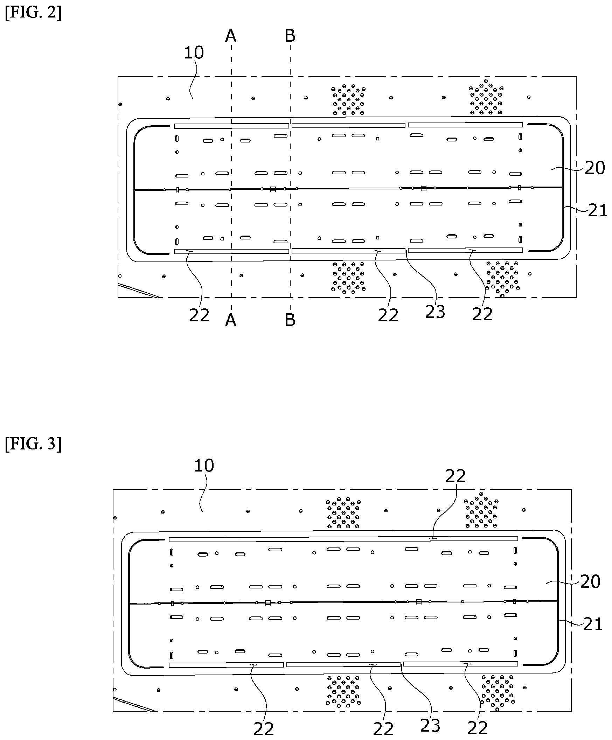

FIG. 2 is a view illustrating an airbag door of a crash pad module according to one embodiment of the present invention.

Referring to FIG. 2, in an airbag door 20 of a crash pad module according to one embodiment of the present invention, a cut line may be formed along an edge and a portion that will be opened, and a through hole 22 may be formed in a portion corresponding to a hinge of the airbag door 20.

The through hole 22 may be formed in a long hollow shape along a hinge part of the airbag door 20. The through hole 22 may be provided as a plurality of through holes 22 formed to be spaced a predetermined distance from each other, and a bridge 23 filling an empty space may be formed between the plurality of through holes 22.

The bridge 23 may prevent deformation of the crash pad 10 and the airbag door 20, fill at least a portion of the through hole 22, and prevent delamination of a scrim 40 when the airbag door 20 and the crash pad 10 are inj ection molded. Since the plurality of through holes 22 may be formed, a plurality of bridges 23 may be formed at a predetermined.

A width of the bridge 23 may be formed to be the same as a width of the through hole 22, and a thickness of the bridge 23 may be formed to be the same as a thickness of the airbag door 20. Since a finishing material such as a leather cover is formed on a front surface of each of the crash pad 10 and the airbag door 20, when the through hole 22 is formed to have a large width, the finishing material may be fall into the through hole 22 and deform an exterior.

In order to prevent a mark of the through hole 22 from being exposed to the outside, the width of the through hole 22 may be formed to be small. As an example, when the width of the through hole 22 is 2 mm or less, a shape of the through hole 22 can be prevented from being exposed to the outside.

Since the thickness of the bridge 23 is formed to be the same as the thickness of the airbag door 20, a front surface of the bridge 23 may be formed to be coplanar with the front surface of the airbag door 20, and thus the mark of the through hole 22 can be prevented from being exposed to the outside. That is, the bridge 23 may support the finishing material and prevent the finishing material from falling into the through hole 22.

The bent portion 42 of the scrim 40 may be located at a portion in which the through hole 22 is formed. The bent portion 42 may be formed at a rear side of the through hole 22, and the scrim 40 may not be exposed from the front surface of each of the airbag door 20 and the crash pad 10.

FIG. 3 is a view illustrating an airbag door according to another embodiment of the present invention.

Referring to FIG. 3, in a hinge part of an airbag door 20 according to another embodiment of the present invention, one through hole 22 may be formed, and a bridge 23 may not be formed inside the through hole 22. In a process of injection molding a crash pad 10 and the airbag door 20, the through hole 22 may be formed while a protruding potion of a mold blocks an injection material from being injected into a corresponding space.

When the portion protruding from the mold is integrally formed to extend in a longitudinal direction of a hinge of the airbag door 20, only one through hole 22 having a long hollow shape may be formed in the hinge part of the airbag door 20.

When one through hole 22 is formed, since it is difficult to prevent an external finishing material from falling into the through hole 22 through the through hole 22, a width of the through hole 22 can be smaller than a width in a case in which the bridge 23 is formed.

In FIGS. 1 to 3, although the large width of the through hole 22 is illustrated to facilitate understanding, the actual width of the through hole 22 may be smaller than the illustrated width and may prevent the external finishing material from falling down.

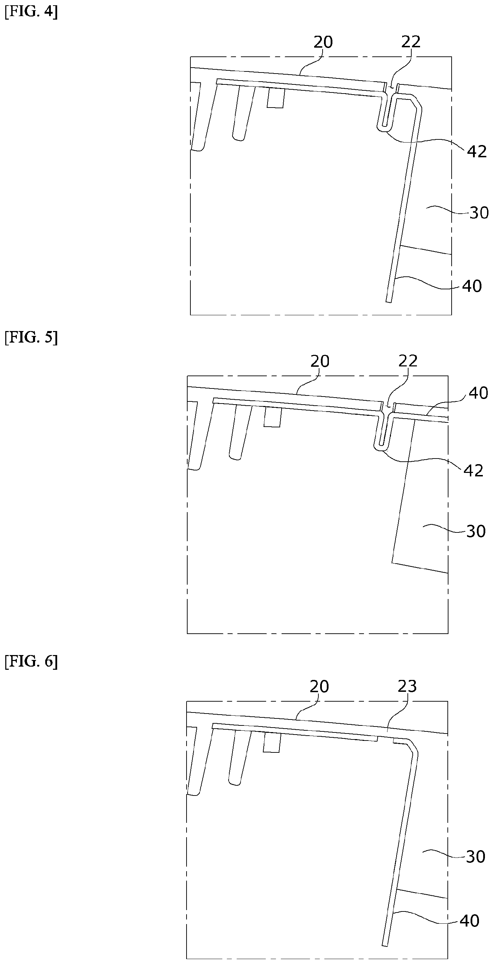

FIG. 4 is a cross-sectional view illustrating a portion in which a through hole of an airbag door is formed according to one embodiment of the present invention, and FIG. 5 is a cross-sectional view illustrating a portion in which a through hole of an airbag door is formed according to still another embodiment of the present invention.

FIGS. 4 and 5 are cross-sectional views illustrating along line A-A in FIG. 2. Referring to FIG. 4, it is shown that a scrim 40 is disposed inside an airbag door 20 and an airbag suit 30. There is a scrim 40 used in an integrated crash pad 10, wherein the scrim is molded in a straight shape or molded to be bent in a "0" shape. In the case of the present embodiment, a crash pad module to which the scrim 40 molded to be bent in the 0" shape is applied is illustrated. In the case of the present embodiment, a bent portion of the scrim 40 may be disposed inside the airbag suit 30.

A bent portion 42 formed in the scrim 40 may be formed to be bent at a rear side of a through hole 22 formed in a hinge part of the airbag door 20, when the airbag door 20 is opened, the bent portion 42 may be unfolded and may hold the airbag door 20.

Referring to FIG. 5, a cross section of a crash pad module to which a scrim 40 formed in a straight shape is applied can be shown. When the crash pad module is manufactured, in a state in which the straight-shaped scrim 40 is unfolded without being molded in a "0" shape before being seated in a mold in advance, an injection material is injected. Accordingly, both ends of the straight-shaped scrim 40 are disposed inside a crash pad 10 without being disposed inside the airbag suit 30 as shown in FIG. 5.

FIG. 6 is a cross-sectional view illustrating a portion in which a bridge of an airbag door is formed according to one embodiment of the present invention.

FIG. 6 is the cross-sectional view illustrating along line B-B in FIG. 2. Referring to FIG. 6, a thickness of a bridge 23 may be formed to be the same as a thickness of an airbag door 20. That is, both surfaces of the bridge 23 may be formed to be coplanar with both surfaces of the airbag door 20. A bent portion 42 of a scrim 40 may not be formed in a portion in which the bridge 23 is formed.

Alternatively, in a scrim 40, at least a portion of a portion in which a bridge 23 is formed may be cut so that the corresponding portion is formed to be hollow. That is, the scrim 40 may be disposed only at a portion at which a through hole 22 is formed to serve as a hinge. Since a protruding portion of a mold is not disposed on a portion in which the bridge 23 is formed, an injection material may fill a corresponding space to form the bridge 23.

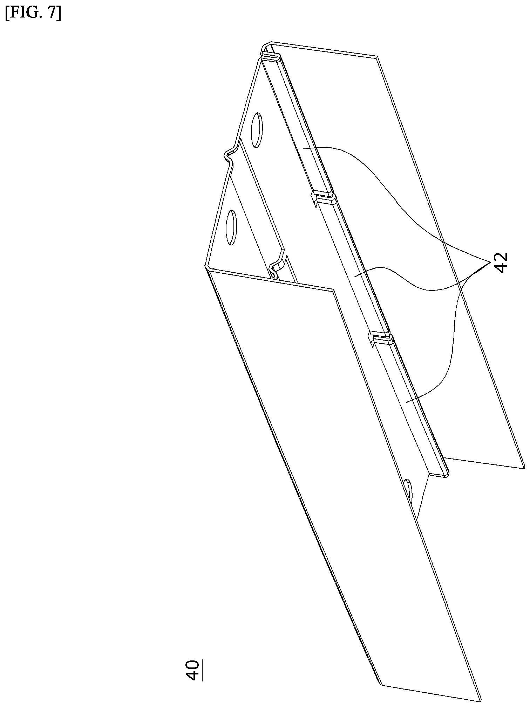

FIG. 7 is a view illustrating a scrim according to one embodiment of the present invention.

Referring to FIG. 7, in a scrim 40 according to one embodiment of the present invention, a bent portion 42 of which at least a portion is bent may be formed. In the case of the present embodiment, the scrim 40 of which both side surfaces are bent in a "0" shape is illustrated. The bent portion 42 is formed in a portion of the scrim 40 disposed on an airbag door 20.

The bent portion 42 is bent to protrude toward a rear surface of the airbag door 20, and the bent portion 42 corresponds to a location of a through hole 22 formed in a hinge part of the airbag door 20. The bent portion 42 may be formed to extend in a longitudinal direction of a hinge, and in the bent portion 42, a portion in which a bridge 23 is formed may be formed to be cut and hollow.

In the bent portion 42 of the scrim 40, since a portion corresponding to the bridge 23 is formed to be cut, a support for maintaining a shape of the bent portion 42 may be formed in a process of manufacturing a crash pad module. The support may be formed in a shape in which the bent portion 42 of the scrim 40 is extended and disposed on a rear surface of the bridge 23. That is, when an injection material is injected, the support may be formed in a manner in which at least some of the injection material is injected into the portion cut in the bent portion 42 of the scrim 40. Since the scrim 40 is formed of a fabric material and has a flexible property, the support may support the scrim 40 to maintain a shape of the bent portion 42 during manufacturing the crash pad module.

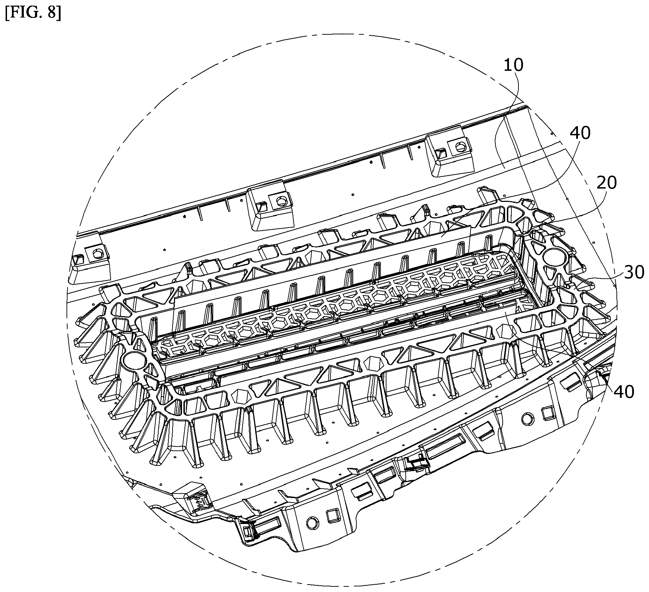

FIG. 8 is a rear view illustrating a crash pad module according to one embodiment of the present invention.

Referring to FIG. 8, the crash pad module according to one embodiment of the present invention may include a crash pad 10, an airbag door 20, and an airbag suit 30 protruding from a rear surface of the airbag door 20 along an edge of the airbag door 20.

A scrim 40 is inserted into the airbag door 20 and the airbag suit 30. The scrim 40 may be disposed to cover a portion of the airbag door 20. As an example, a width of the scrim 40 may be formed to cover 50% or more of the airbag door 20. In the case of the present embodiment, the scrim 40 that is smaller than a width of the airbag door 20 is illustrated. A bent portion 42 of the scrim 40 is disposed in a hinge part of the airbag door 20. The bent portion 42 may be provided as a plurality of bent portions 42 formed to be spaced a predetermined distance from each other in a longitudinal direction.

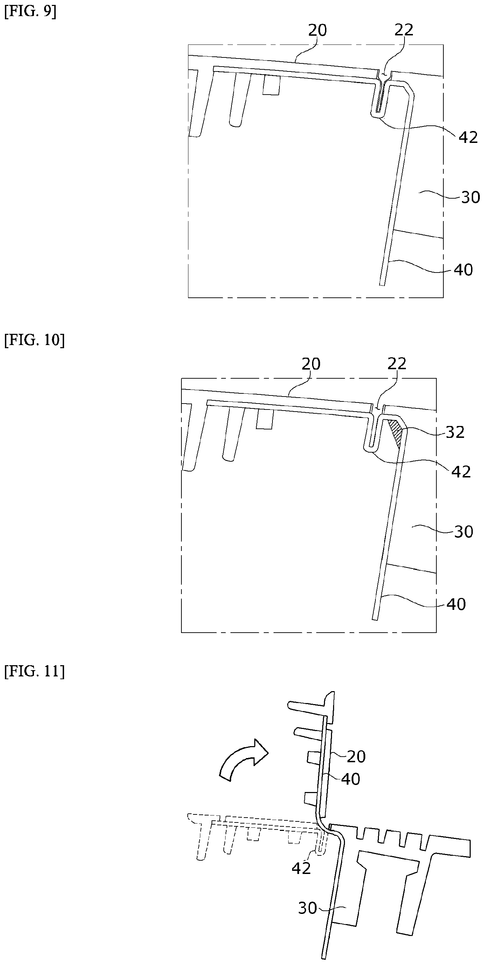

FIG. 9 is a cross-sectional view illustrating a portion in which a through hole of an airbag door is formed according to still another embodiment of the present invention.

Referring to FIG. 9, an injection material may be injected on an inner side of a bent portion 42 of a scrim 40 so that the bent portion 42 may be molded in the form of a thin film. A protruding pin 310 of an upper mold 300 may be inserted into the bent portion 42 of the scrim 40, then the injection material may be injected, and thus the injection material may be prevented from being injected into the bent portion 42.

A width of the protruding pin 310 may be formed to correspond to an inside space of the bent portion 42 of the scrim 40. Alternatively, a width of a protruding pin 310 may be formed to be smaller than an inside space of a bent portion 42 of a scrim 40. When a protruding pin 310 is spaced a predetermined distance from an inner surface of the bent portion 42 of the scrim 40, an injection material may be injected into a corresponding space to thinly cover the inner surface of the bent portion 42.

The injection material which covers the inner surface of the bent portion 42 may serve to hold the airbag door 20 with the bent portion 42 when the airbag door 20 is opened. In addition, when a strength of a hinge obtained from only the scrim 40 is insufficient, the insufficient strength can be compensated for. In an example, the bent portion 42 may absorb stresses occurring during an deployment of the airbag where the hinge is unable to translate in the deploying direction causing stresses (e.g., a deployment stress) to the airbag door 20 which may cause delamination and/or damage to the airbag, the airbag door 20, and the scrim 40 by allowing a compensatory translation of the scrim 40.

FIG. 10 is a cross-sectional view illustrating an airbag door according to still another embodiment of the present invention;

Referring to FIG. 10, a crash pad module according to still another embodiment of the present invention may further include a reinforcing rib 32 connecting an airbag suit 30 and an airbag door 20.

A portion of the airbag door 20 disposed directly on a side surface of a hinge may receive a strong force due to an inflation force when the airbag door 20 is deployed, and thus there is a possibility that a scrim 40 is delaminated from a crash pad 10 and the airbag suit 30. Although the bent portion 42 of the scrim 40 may compensate for an insufficient length of the hinge to prevent the delamination of the scrim 40, the reinforcing rib 32 may be formed to more stably prevent the delamination of the scrim 40. In addition, when the reinforcing rib 32 is formed, cracks which may occur in the airbag door 20 and the airbag suit 30 can be prevention.

The reinforcing rib 32 may be formed to connect a rear surface of the airbag door 20 and a side surface of the airbag suit 30. The reinforcing rib 32 may be provided as a plurality of reinforcing ribs 32 formed to be spaced a predetermined distance from each other in a longitudinal direction of a through hole 22 formed in a hinge part of the airbag door 20. The reinforcing rib 32 may be formed in a triangular shape to connect the rear surface of the airbag door 20 and the side surface of the airbag suit 30.

There is no limit to the shape and the number of the reinforcing ribs 32, any shape and any number of the reinforcing ribs 32 may be applied as long as, when the airbag door 20 is opened, the reinforcing ribs 32 may disperse a stress applied to the rear surface of the airbag door 20 and the side surface of the airbag suit 30 and prevent possible cracks and delamination of the scrim 40.

FIG. 11 is a view illustrating an airbag door of a crash pad module that is opened according to one embodiment of the present invention.

Referring to FIG. 11, when a PAB is deployed, an airbag door 20 may be rotated forward and opened. When the airbag door 20 is opened, the airbag door 20 is rotated about a hinge. In this case, the hinge is elongated and supports the airbag door 20.

A bent portion 42 of a scrim 40 may be unfolded according to the rotation of the airbag door 20 to compensate for an insufficient length of the hinge. Accordingly, the airbag door 20 and the scrim 40 can be prevented from being torn or delaminated due to elongation.

A windshield is disposed in a direction in which the airbag door 20 is opened. When the airbag door 20 is opened, and a distance at which the airbag door 20 moves from the crash pad module increases, the airbag door 20 may collide with the windshield, and thus it may be difficult to protect a passenger.

A length of the bent portion 42 of the scrim 40 supporting the airbag door 20 may be set so that the airbag door 20 does not collide with the windshield. As an example, the length of the bent portion 42 may be formed to be less than 6 mm to prevent the airbag door 20 from colliding with the windshield.

Hereinafter, a mold for manufacturing a crash pad module according to one embodiment of the present invention will be described with reference to the accompanying drawings.

The mold for manufacturing a crash pad module according to one embodiment of the present invention may include a lower mold 100 in which a scrim seating part 110 on which a scrim 40 is seated is formed, an upper mold 300 engaged with the lower mold 100, and a press jig 200 which bends at least a portion of the scrim 40 seated in the lower mold 100.

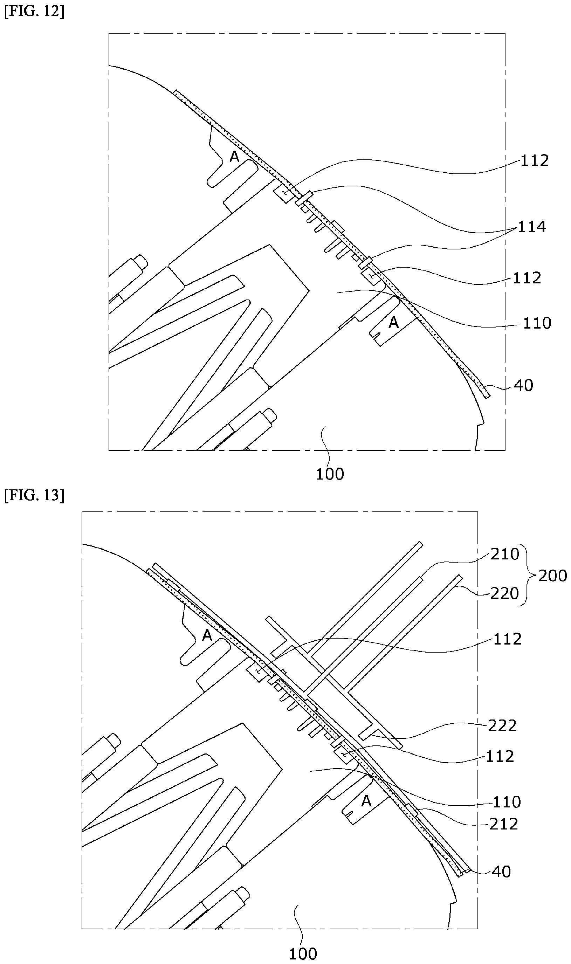

FIG. 12 is a view illustrating the lower mold of the mold for manufacturing a crash pad module according to one embodiment of the present invention.

Referring to FIG. 12, the scrim seating part 110 on which the scrim 40 is seated may be formed in the lower mold 100. Before an injection material is injected, the scrim 40 may be seated in the lower mold 100 in advance and inserted into a crash pad 10, an airbag door 20, and an airbag suit 30.

As shown in FIG. 12, a guide pin 114 may be formed on the scrim seating part 110 to hang the scrim 40 so as to prevent the scrim 40 from moving in the lower mold 100 when the scrim 40 is seated on the scrim seating part 110.

The guide pin 114 may be formed to protrude from the scrim seating part 110, and at least a portion of the scrim 40 may be hung on the guide pin 114. A hole may be formed in the scrim 40 to correspond to a location and shape of the guide pin 114 and may fix the scrim 40 in a manner of inserting the guide pin 114 into the hole. The guide pin 114 may be provided as a plurality of guide pins 114 formed on the scrim seating part 110, and the plurality of guide pins 114 may be disposed to be spaced a predetermined distance from each other.

A bent groove 112 for forming a bent portion 42 of the scrim 40 may be formed in the scrim seating part 110. The bent groove 112 may be formed to be recessed inward from the scrim seating part 110 in the scrim seating part 110. The bent portion 42 of the scrim 40 may be formed by a method of inserting at least of a portion of the scrim 40 into the bent groove 112. A shape of the bent groove 112 corresponds to a shape of the bent portion 42 of the scrim 40, and since the bent portion 42 may be provided as a plurality of bent portions 42, the bent groove 112 may also be provided as a plurality of bent grooves 112 to correspond to the bent portions 42.

When the bent portion 42 of the scrim 40 is formed, the scrim 40 is formed to be pushed into the bent groove 112, and an inner side of the bent groove 112 may be formed to have a curvature. When the inner side of the bent groove 112 is formed as a curved surface having a curvature, damage to the scrim 40 generated when the scrim 40 is inserted into the bent portion 42 can be prevented.

The bent groove 112 may not be disposed in a portion in which a bridge 23 of the airbag door 20 is formed. In the portion in which the bridge 23 is formed, since a protruding pin 310 of the upper mold 300 is not disposed, a bent groove 112 may not be disposed to prevent the injection material from being introduced.

A space which may be formed to correspond to a shape of a rear surface of the crash pad 10 and a shape of a rear surface of the airbag door 20 and in which the airbag suit 30 is formed may be formed in the lower mold 100. A structure such as a plurality of ribs for reinforcing strength may be formed on the rear surfaces of the airbag door 20 and the crash pad 10, and the corresponding structure is formed by filling the lower mold 100 having a recessed shape with the injection material.

The airbag suit 30 protruding from an edge portion of the airbag door 20 toward the rear surface of the airbag door 20 is formed by filling a groove formed to correspond to a shape of the airbag suit 30 in the lower mold 100 with the injection material. Region A of FIG. 12 indicates a groove in which the airbag suit 30 is formed.

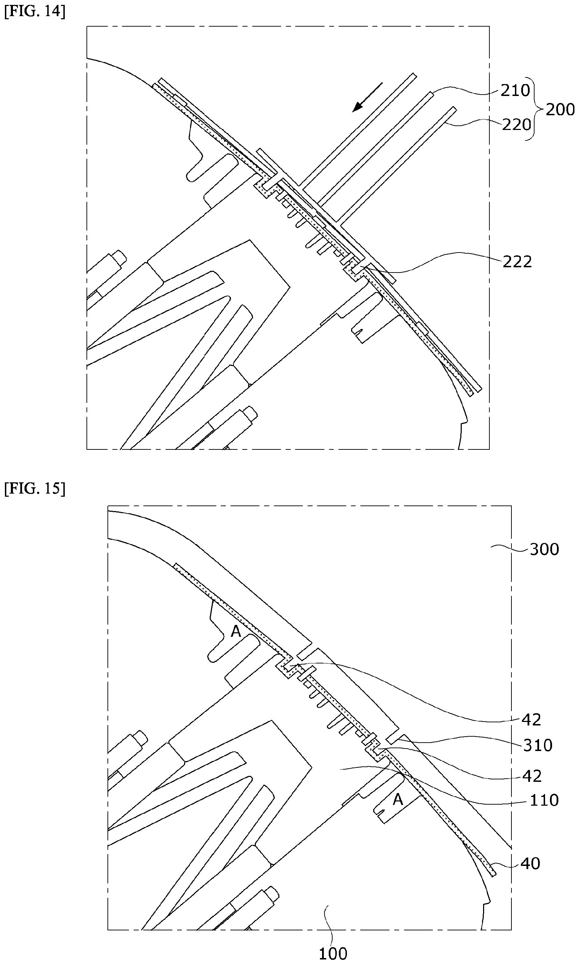

FIG. 13 is a view illustrating the lower mold and the press jig of the mold for manufacturing a crash pad module according to one embodiment of the present invention, and FIG. 14 is a view illustrating the press jig of the mold for manufacturing a crash pad module that bends the scrim according to one embodiment of the present invention.

Referring to FIGS. 13 and 14, the press jig 200 serves to form the bent portion 42 of the scrim 40 before the lower mold 100 is engaged with the upper mold 300 after the scrim 40 is seated on the scrim seating part 110 of the lower mold 100. The press jig 200 may include a pusher 220 which pushes at least a portion of the scrim 40 into the bent groove 112 to form the bent portion 42 and a fixing part 210 which fixes the scrim 40 while the bent portion 42 is formed.

The pusher 220 and the fixing part 210 may be sequentially moved by different driving parts. Accordingly, the fixing part 210 may move toward the lower mold 100 and fix the scrim 40 before the pusher 220 moves, and then, the pusher 220 may move toward the lower mold 100 to form the bent portion 42.

As shown in FIG. 13, when the scrim 40 is seated on the scrim seating part 110, the fixing part 210 of the press jig 200 fixes both ends of the scrim 40 such that the scrim 40 does not move. The fixing part 210 presses a front surface of the scrim 40, and a vacuum suction plate 212 may be formed on both ends of the fixing part 210 to fix the scrim 40 such that the scrim 40 does not move. A method of fixing the scrim 40 by the fixing part 210 is not limited, and any part which may fix the scrim 40 through a different method may be applied even without the vacuum suction plate 212. As an example, the scrim 40 may be fixed through a method that a material with a high frictional force is disposed on both ends of the fixing part 210 and both ends of the scrim 40 are pressed to provide a frictional force.

As shown in FIG. 14, when the fixing part 210 fixes the scrim 40, the pusher 220 moves forward to insert at least a portion of the scrim 40 into the bent groove 112. A bending protrusion 222 may be formed on the pusher 220 to push the scrim 40 into the bent groove 112. The bending protrusion 222 may be formed to correspond to a shape of the bent groove 112 of the scrim seating part 110. When the bending protrusion 222 inserts at least a portion of the scrim 40 into the bent groove 112, since the scrim 40 is pulled and receives a force, an end of the bending protrusion 222 may be formed to have a curvature to prevent damage to the scrim 40 formed of a fabric material.

A portion of the fixing part 210 corresponding to the bent groove 112 may be opened so that the bending protrusion 222 of the pusher 220 is inserted into the bent groove 112. That is, at least a portion of the fixing part 210 may be opened so that the bent groove 112 and the scrim 40 disposed in the bent groove 112 are exposed in a direction in which the pusher 220 is disposed.

The bending protrusion 222 of the pusher 220 may be formed to correspond to a shape and the number of the bent grooves 112. Accordingly, when the bent groove 112 is provided as the plurality of bent grooves 112, the bending protrusion 222 may be provided as a plurality of bending protrusions 222 formed to be spaced a predetermined distance from each other.

FIG. 15 is a view illustrating the bent scrim seated on the lower mold of the mold for manufacturing a crash pad module according to one embodiment of the present invention.

Referring to FIG. 15, it may be shown that the bent portion 42 of the scrim 40 is formed by the press jig 200. The scrim 40 may be seated on the lower mold 100 in a state in which the bent portion 42 is formed. When the bent portion 42 is formed, the scrim 40 is completely molded, and then the upper mold 300 may be disposed.

The upper mold 300 is formed to correspond to a shape of the lower mold 100 and disposed on a front surface of the lower mold 100. The upper mold 300 may be formed to correspond to a shape of a front surface of each of the crash pad 10 and the airbag door 20, and the injection material may be injected into a space between the upper mold 300 and the lower mold 100 to form the crash pad module.

In FIG. 15, a state before the upper mold 300 is engaged with the lower mold 100 is illustrated. The press jig 200 for molding the scrim 40 moves outward from the lower mold 100, the upper mold 300 may be moved toward the lower mold 100 and engaged with the lower mold 100.

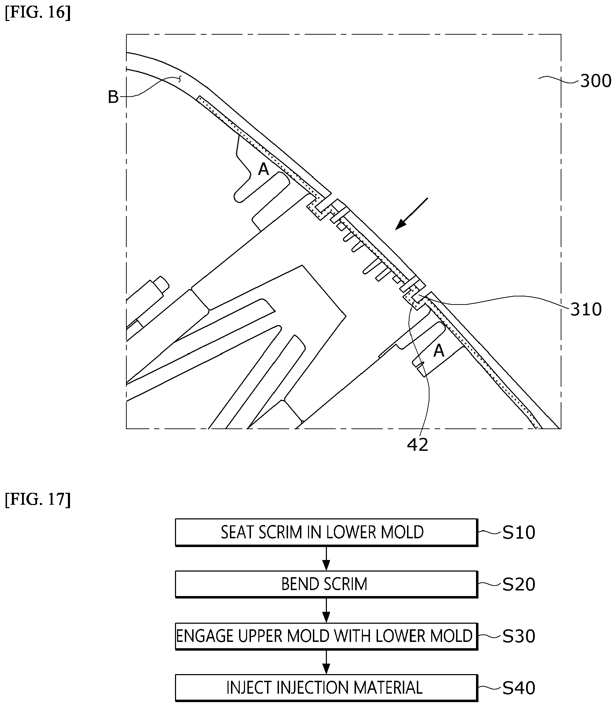

FIG. 16 is a view illustrating the lower mold and the upper mold of the mold for manufacturing a crash pad module that are engaged with each other according to one embodiment of the present invention.

Referring to FIG. 16, it may be shown that the upper mold 300 is disposed on and engaged with the front surface of the lower mold 100. The protruding pin 310 is formed on the upper mold 300 to correspond to the bent groove 112 of the lower mold 100.

The protruding pin 310 may be inserted into the bent groove 112 of the lower mold 100 and the bent portion 42 of the scrim 40 to prevent the injection material from being injected into the bent groove 112 and the bent portion 42. A width of the protruding pin 310 may be a length obtained by subtracting a thickness of the bent portion 42 of the scrim 40 from a width of the bent groove 112. That is, the protruding pin 310 may be formed to correspond to an inner thickness of the bent portion 42 of the scrim 40.

The protruding pin 310 may be inserted into the bent portion 42 of the scrim 40, and thus the injection material may not be injected into the bent portion 42. Alternatively, the protruding pin 310 may be formed inside the bent portion 42 of the scrim 40 to be spaced a predetermined distance from a side surface of the bent portion 42. That is, a diameter of the bending protrusion 222 may be greater than a diameter of the protruding pin 310. When the protruding pin 310 is disposed in the bent portion 42 to be spaced the predetermined distance from the side surface of the bent portion 42, the injection material may be injected using the corresponding distance and applied in the form of a thin film on an inner side of the bent portion 42.

A length of the protruding pin 310 may be a length obtained by adding a thickness of a portion corresponding to the airbag door 20 to a depth of the bent portion 42. In FIG. 16, region B corresponds to a portion in which the airbag door 20 and the crash pad 10 are formed. Accordingly, the protruding pin 310 may protrude to a length obtained by adding a height of region B to the depth of the bent portion 42 from one surface of the upper mold 300.

Hereinafter, a method of manufacturing a crash pad module using the mold for manufacturing a crash pad module having the above-described configuration will be described in detail.

FIG. 17 is a flowchart illustrating a method of manufacturing a crash pad module using a mold for manufacturing a crash pad module according to one embodiment of the present invention.

Referring to FIG. 17, a method of manufacturing a crash pad module according to one embodiment of the present invention includes seating a scrim 40 in a lower mold 100 (S10), bending the scrim 40 (S20), engaging an upper mold 300 with the lower mold 100 (S30), and injecting an injection material (S40).

In the method of manufacturing the crash pad module illustrated in FIG. 17, the mold for manufacturing a crash pad module illustrated in FIGS. 12 to 16 may be sequentially disposed and processed.

Before the injection material is injected, the scrim 40 may be seated in the lower mold 100. The scrim 40 may be disposed in the lower mold 100 in a manner of being seated on a scrim seating part 110 formed in the lower mold 100. The scrim 40 may be hung on a guide pin 114 formed on the scrim seating part 110 so that a location of the scrim 40 may be fixed.

After the scrim 40 is disposed, operation S20 of bending the scrim 40 may be performed. Operation S20 of bending the scrim 40 may include arranging a press jig 200 on a front surface of the lower mold 100, moving the press jig 200 to insert a bending protrusion 222 into a bent groove 112, and inserting the scrim 40 into the bent groove 112 and bending the scrim 40.

Since the bent groove 112 is formed to be recessed in the scrim seating part 110 of the lower mold 100, the bending protrusion 222 formed on a pusher 220 of the press jig 200 may push the scrim 40 into the bent groove 112 to bend at least a portion of the scrim 40. A portion bent by the bending protrusion 222 may form a bent portion 42 of the scrim 40.

While the scrim 40 is bent, an outer side of the scrim 40 may be fixed by the lower mold 100 and a fixing part 210 of the press jig 200. The fixing part 210 may fix the scrim 40 in a manner of providing a frictional force by pressing an outer side of the scrim 40 against the lower mold 100. Alternatively, a vacuum suction plate 212 may be formed on the fixing part 210 and may suction the outer side of the scrim 40 to fix the scrim 40.

After the scrim 40 is bent, operation S30 of engaging the upper mold 300 with the lower mold 100 may be processed. Operation S30 of engaging the upper mold 300 with the lower mold 100 may include separating the press jig 200 from the lower mold 100, arranging the upper mold 300 on the front surface of the lower mold 100, and moving the upper mold 300 to insert a protruding pin 310 into the bent groove 112.

The upper mold 300 and the lower mold 100 are disposed with predetermined spaces A and B interposed therebetween, and the injection material is injected into the corresponding spaces to form a crash pad module. The protruding pin 310 may be formed on the upper mold 300 and inserted into the bent portion 42 of the scrim 40.

When the protruding pin 310 is inserted into the bent portion 42 of the scrim 40, the protruding pin 310 may prevent the injection material from being injected into the bent portion 42 and the bent groove 112. The injection material may fill the spaces A and B between the upper mold 300 and the lower mold 100 to form a crash pad 10, an airbag door 20, and an airbag suit 30.

In the method of manufacturing the crash pad module, the scrim 40 may be seated in the lower mold 100 by an automatic multijoint robot. Specifically, the scrim 40 may be seated on the scrim seating part 110 of the lower mold 100 through an insert chuck formed on an end of the automatic multi-joint robot. The insert chuck may supply the scrim 40 and include the press jig 200 to mold the bent portion 42.

According to one embodiment of the present invention, when a bent portion of a scrim, which is inserted into a crash pad and an airbag door, is unfolded and the airbag door is deployed, an insufficient length can be compensated for, and the airbag door can be stably supported.

Various embodiments of the present disclosure do not list all available combinations but are for describing a representative aspect of the present disclosure, and descriptions of various embodiments may be applied independently or may be applied through a combination of two or more.

A number of embodiments have been described above. Nevertheless, it will be understood that various modifications may be made. For example, suitable results may be achieved if the described techniques are performed in a different order and/or if components in a described system, architecture, device, or circuit are combined in a different manner and/or replaced or supplemented by other components or their equivalents. Accordingly, other implementations are within the scope of the following claims.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A crash pad module, comprising:
a crash pad;
an airbag door configured to be opened in a first direction when a portion of the crash pad is cut; and
a scrim inserted into the crash pad and the airbag door,
wherein the scrim includes a bent portion formed by bending a portion of the scrim,
wherein a through hole is formed in a hinge of the airbag door, and
wherein the bent portion is disposed at a location corresponding to the through hole.

2. The crash pad module of claim 1, wherein the through hole is defined as a long hollow shape extending in a longitudinal direction of the hinge; and
wherein a bridge connecting portions of the through hole in a width direction is formed inside the through hole.

3. The crash pad module of claim 2, wherein the through hole is provided as one of a plurality of through holes, the plurality of through holes being spaced at a predetermined distance from each other in the longitudinal direction of the hinge.

4. The crash pad module of claim 2 or 3, further comprising:
an airbag suit, the airbag suit being configured to protrude from an edge portion of the airbag door toward a rear surface of the crash pad.

5. The crash pad module of claim 4, further comprising:
a reinforcing rib, the reinforcing rib being provided on a portion at which a rear surface of the airbag door is in contact with the airbag suit.

6. The crash pad module of claim 4 or 5, wherein the crash pad, the airbag door, and the airbag suit are integrally formed.

7. The crash pad module of any one of claims 2 to 6, wherein a thickness of the bridge is the same as a thickness of the airbag door.

8. The crash pad module of any one of claims 2 to 7, wherein, in the bent portion of the scrim, an empty portion corresponding to the bridge is provided.

9. The crash pad module of any one of claims 1 to 8, further comprising:
an injection material, the injection material being configured as a thin film on an inner surface of the bent portion.

10. The crash pad of any one of claims 1 to 9, wherein the bent portion is configured to unfold and translate, in a deployment of the airbag door, to compensate for a deployment stress on the scrim and airbag door.

11. A crash pad module, comprising:
a crash pad;
an airbag door configured to be opened in a first direction when a portion of the crash pad is cut, the airbag door comprising a hinge, the hinge having a through hole defined therein; and
a scrim inserted into the crash pad and the airbag door, the scrim comprising a bent portion formed by bending a portion of the scrim, the bent portion being disposed at a first location on the scrim corresponding to a second location of the through hole in the airbag door.

12. The crash pad module of claim 11, further comprising:
a bridge configured to connect portions of the through hole in a width direction, the bridge being formed inside the through hole,
wherein the through hole is defined as a long hollow shape extending in a longitudinal direction of the hinge.

13. The crash pad module of claim 12, wherein bent portion includes an empty portion defined therein corresponding to the bridge.

14. The crash pad module of any one of claims 11 to 13, further comprising:
an airbag suit, the airbag suit being configured to protrude from an edge portion of the airbag door toward a rear surface of the crash pad and
the bent portion is configured to unfold and translate, in a deployment of the airbag door, to secure the airbag door and compensate for a deployment stress on the scrim and airbag door.

15. The crash pad module of claim 14, further comprising:
a reinforcing rib, the reinforcing rib being provided on a third location at which a rear surface of the airbag door is in contact with the airbag suit and
the reinforcing rib is configured to absorb a stress between the rear surface of the airbag door and a side surface of the airbag suit.
